# EUROPEAN PATENT SPECIFICATION

(11) **EP 4 425 863 B1**
(45) Date of publication and mention of the grant of the patent: **06.08.2025**
(21) Application number: 23159848.3
(22) Date of filing: 03.03.2023
(51) Int. Cl.: H04L 41/22, H05B 47/175, H05B 47/19, H04L 41/0806, H04L 9/40, H04W 4/50, H04W 12/06, H04W 12/30, H04W 48/16

(54) **METHOD FOR PROVIDING CONNECTION INFORMATION FOR LIGHTING SYSTEM COMPONENTS**
VERFAHREN ZUR BEREITSTELLUNG VON VERBINDUNGSINFORMATIONEN FÜR BELEUCHTUNGSSYSTEMKOMPONENTEN
PROCÉDÉ DE FOURNITURE D'INFORMATIONS DE CONNEXION POUR COMPOSANTS DE SYSTÈME D'ÉCLAIRAGE

(43) Date of publication of application: 04.09.2024
(73) Proprietor: Zumtobel Lighting GmbH, 6850 Dornbirn (AT)
(72) Inventor: Heim, Andreas, 6850 Dornbirn (AT)
(74) Representative: Beder, Jens

(56) References cited:
- WO-A1-2012/035366
- US-A1- 2010 210 302
- US-A1- 2014 310 350

## Description

The present invention relates to the technical field of networking wireless devices, and more particularly, to a method and system for providing connection information required by a provisioning device to establish a wireless connection between the provisioning device and a lighting system component.

In lighting systems, switches and sensors send signals to luminaires or other system components often via a wireless communication network. To integrate a component (e.g., luminaire, sensor or switch) into the network, the device needs respective network information (e.g., network name, password, key). In the absence of a control panel attached to the components, the network information can be entered into a provisioning device (e.g., tablet, mobile phone, commissioning device) and then transmitted from the provisioning device to the component via a wireless connection.

In order to establish the wireless connection between the provisioning device and the component, the provisioning device requires connection information (e.g., Bluetooth-PIN, media access control address). This information can be provided to the provisioning device in different ways. For example, the connection information or a QR code containing the connection information can be printed/attached to the component or its packing and scanned by the provisioning device, or an NFC tag storing the connection information can be added to the component.

However, after installation the connection information might not be physically accessible anymore, e.g., since the connection information is on the backside of the component or behind a recessed ceiling. Even if the component is not covered or shielded, it may be very difficult or impractical to obtain the connection information, for example, if the component is mounted on a high ceiling so that the connection information is out of sight or the NFC tag is out of radio range.

Document US 2014/310350 A1 discloses a method and a computing device to transmit provisioning information to respective computing devices for self-provisioning of each of the respective computing devices. The method comprises receiving by a first computing device, account information for a plurality of users and sensing by the first computing device a second computing device in wireless communication range of the first computing device. The method further includes transmitting by the first computing device and via wireless device-to-device communication provisioning information from the first computing device to the second computing device. The provisioning information include instructions for the second computing device to automatically configure itself via a network with one or more applications of a user account associated with one or more of the plurality of users.

It is an object of the present invention to provide a method and system, which reduce the above problems. In particular, an object of the present invention is to provide anapparatus, a system, a method and a program, with which the connection information can be obtained with low effort and costs.

This object is achieved by an apparatus, a system, a method and a program according to the enclosed independent claims. Advantageous features of the present invention are defined in the corresponding dependent claims.

According to the present invention, an apparatus for providing connection information required by a provisioning device to establish a wireless connection between the provisioning device and a networkable device comprises a processor configured to store, for each of a plurality of networkable devices, an unique identification code, the connection information assigned to the respective unique identification code and potentially even more information, e.g. device type and other key data. The processor is further configured to obtain an order for a certain number of pieces of the networkable devices, to identify the unique identification code for each piece to be delivered in response to the order, to generate, for the order, access information to access only the connection information assigned to the unique identification codes that have been identified and to provide the access information to the order. The processor is further configured to receive a request including the generated access information, and to provide the connection information assigned to the received access information.

The apparatus can be used by a manufacturer of the networkable devices or a dealer and the access information can be provided to a user (customer) in print or in electron-ic/digital form. With the access information provided, for example, as part of the order confirmation, the user or a device controlled by the user can access the connection information without requiring physical access to the networkable device.

Preferably, customer orders are sent to the apparatus, wherein each customer order contains information on a quantity (number of pieces) for at least one type of ordered networkable device, and the apparatus determines/identifies the unique identification code for each piece of the order and generates the access information. The unique identification codes can be identified at the time the order is received or when the at least one ordered networkable device is packed for shipment to the customer, for example, using a scanner to capture/identify the unique identification code attached to the networkable device or its packaging. Alternatively, the processor can select/identify any stored unique identification code of a networkable device matching the order, output the selected unique identification code(s) to the packaging station/packer and marks the selected unique identification code(s) as sold or deletes them to ensure that each stored unique identifier code is assigned only once.

Preferably, generation of access information comprises generation of an individual order number and a personal identification number (PIN). The access information can be generated by encrypting information contained in the order (customer name/address, date of order) and/or can be provided before or after the unique identification code is identified.

The connection information can be accessed from a server, wherein the access information contains at least one Uniform Resource Locator and the processor is configured to generate a HTML file that is associated to the Uniform Resource Locator and that contains the connection information assigned to the at least one unique identification code.

Alternatively or in addition, access is possible only with the individual order number and the personal identification number added to the access information, wherein the processor is configured to assign, for each order, the order number and/or the personal identification number to the connection information. An order includes a number of networkable devices for which the apparatus identifies the unique identification codes, or the order may contain the number of unique identification codes, all of which are assigned to the order number and the personal identification number.

The processor can be configured to generate a graphical user interface to allow a user to enter the order number and/or the personal identification number and to display the connection information of each network-enabled device assigned to the order number and the personal identification number after the user enters the order number and the personal identification number.

The user can resell some of his network-enabled devices and has separate access information generated for the resold devices. For this, the processor can be configured to control the graphical user interface to display, after the user enters the order number and the personal identification number, all unique identification codes assigned to the order number and the personal identification number and to allow the user to select at least one of the displayed unique identification code, wherein the processor generates sub access information to access only the connection information assigned to the selected unique identification code.

The access information and/or sub access information can be presented in text form and/or in the form of a QR code. The QR code can be captured optically by the provisioning device.

The connection information can contain a Bluetooth-PIN and/or a media access control address of the respective networkable device or its transmitter module.

The apparatus can be configured to receive the order and to generate and output an order confirmation, invoice or delivery note including the access information assigned to the order.

According to the present invention, a system comprises at least the described apparatus and the provisioning device.

In addition, the apparatus can comprise a means configured to input the access information by a user and a means configured to output, to the user, the connection information assigned to the access information, wherein the provisioning device comprises a means configured to input the connection information by the user.

The provisioning device can further comprise a means configured to input the access information by the user and a means configured to transmit the access information to the apparatus and to receive, from the apparatus, the connection information assigned to the access information.

In addition, the provisioning device can store network information required by the networkable device to connect the networkable device to a wireless communication network, and can be configured to detect the networkable device within radio range of the provisioning device, to establish the wireless connection between the provisioning device and the detected networkable device based on the connection information and to transmit the network information to the networkable device via the established wireless connection.

The system can further comprise the networkable device, wherein the networkable device is configured to receive the network information, to detect a wireless access point of the wireless communication network within a radio range of the networkable device and to establish a connection to the wireless access point based on the network information.

The wireless communication network can be Wireless Local Area Network (WLAN) or Wireless Personal Area Network (WPAN).

In this way, the network information for each networkable device is made available digitally. The manufacturer of the networkable devices can provide exclusively the order number and the PIN to the customer as part of the order confirmation, delivery note and/or shipment confirmation email. Using these numbers, the customer or electrician can easily access the network information for all networkable devices during networking the wireless devices, so that no physical access to the networkable devices is necessary.

According to the present invention, a method being performed by the described apparatus for providing connection information required by a provisioning device to establish a wireless connection between the provisioning device and a networkable device comprises the steps of:
- storing, for each of a plurality of networkable devices, an unique identification code and the connection information assigned to the respective unique identification code in a data base or accessing the data base,
- obtaining an order for a certain number of pieces of the desired networkable devices,
- identifying the unique identification code for each piece that are to be delivered in order to satisfy the order,
- generating, for the order, access information configured to allow access only to the connection information assigned to the unique identification codes that have been identified, and
- providing the access information, and
- receiving a request including the generated access information, and
- providing the connection information assigned to the received access information.

The unique identification code, the connection information and the access information can be stored associated with each other in the database in the form of a table.

According to the present invention, a program that, when running on a computer or loaded onto a computer, causes the computer to execute the steps of:
- storing, for each of a plurality of networkable devices, an unique identification code and the connection information assigned to the respective unique identification code,
- obtaining an order for a certain number of pieces of the networkable devices,
- identifying the unique identification code for each piece,
- generating, for the order, access information configured to access only the connection information assigned to the unique identification code that has been identified, and
- providing the access information, and
- receiving a request including the generated access information, and
- providing the connection information assigned to the received access information.

The system and/or any of the functions described herein may be implemented using individual hardware circuitry, using software functioning in conjunction with at least one of a programmed microprocessor, a general purpose computer, using an application specific integrated circuit (ASIC) and using one or more digital signal processors (DSPs).

Embodiments of the invention are discussed in detail with reference to the enclosed figures, in which
- Fig. 1: shows a simplified block diagram of according to an embodiment of the present invention,
- Fig. 2 to Fig. 5: show different stages of a graphical user interface generated by a the server of the system shown in Fig. 1, and
- Fig. 6: shows a flowchart of the method according to an embodiment of the present invention.

In the figures, same reference numbers denote same or equivalent structures. The explanation of structures with same reference numbers in different figures is avoided where deemed possible for sake of conciseness.

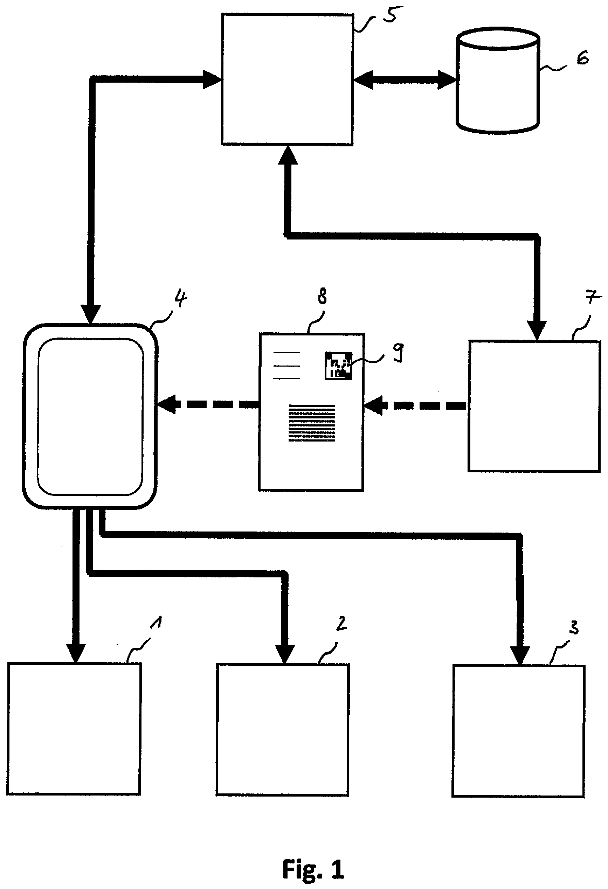

FIG. 1 shows a system for providing connection information according to an embodiment of the present invention. The system shown in FIG. 1 comprises a plurality of networkable devices, a provisioning device 4, a server 5, a data base 6 and an user terminal 7 (data processing device). The networkable device 1..3 are components, such as luminaires, that are to be integrated into a wireless network of a lighting system (not shown). For the integration, network information to connect the network is required from each of the networkable devices 1..3.

The provisioning device 4 is a mobile commissioning device, such as a tablet, on which the network information, such as network name and key, is stored and which comprises a Bluetooth transmitter to transmit the network information to each networkable device 1..3 by a separate wireless connection. In addition, the provisioning device 4 can be adapted to configure the components of the lighting system, including the networkable devices 1..3, by transmitting setup commands, addresses and/or parameters over the wireless connection. Alternatively, the networkable devices 1..3 can be configured via the wireless network after network integration.

The manufacturer of the networkable devices 1..3 collects from each manufactured and orderable device its device ID (unique identification code) and information about the Bluetooth transmitter installed in the device. The device IDs are stored by the server 5 together with the respective connection information in the database 6. The connection information contains Bluetooth-PIN, name and/or a media access control address and is required by the provisioning device 4 to establish the wireless connection between the provisioning device 4 and the respective networkable device 1..3. Further information useful for distinguishing the devices, such as date of manufacture, device type, consumption power, luminous flux and color temperature, can be stored for each device ID. In this way, datasets are stored in the database 6, each containing at least the device ID and the corresponding connection information.

The networkable devices 1..3 can be ordered via the Internet. To place an order, the provisioning device 4 connects the server 5 and selects the desired device(s). Before delivery to the customer, the server 5 determines the device ID of each device belonging to the customer's order, marks the determined device IDs as sold or reserved, generates an order number and/or PIN that is so complex that it cannot be guessed (e.g. 64-bit hex number, pseudo-random sequence) and stores the generated order number/PIN in the database 6 so that each dataset that has one of the determined device IDs is extended by the generate order number/PIN. As described above, the device ID can be determined at the time the order is received or when the networkable devices 1..3 are packed for shipment. This can be done manually or in an automated manner.

With the order number/PIN, the provisioning device 4 can access the stored connection information of the networkable devices 1..3 and the server 5 transmits the order number/PIN as access information to the provisioning device 4 that stores the access information. To connect to the networkable devices 1..3, the provisioning device 4 retrieves the connection information from the database 6 by transmitting a request including the stored access information to the server 5, which determines each connection information assigned to the access information, i.e. the order number/PIN, and transmits the determined connection information to the provisioning device 4. The provisioning device 4 selects any connection information and establishes a connection to one of the networkable devices 1..3 to transmit the network information. After that the provisioning device 4 selects another connection information and connects to another networkable devices 1..3. This can continue until the network information has been transmitted to all networkable devices 1..3.

To automatically retrieve the connection information, the provisioning device 4 and/or its software (app) can be provided by the manufacturer of the networkable devices 1..3, so that the provisioning device 4 can directly connect to the server 5 if the order number and/or PIN has been entered in the app.

Alternatively, the user can visit a manufacturer's website using the user terminal 7 and enter the order number and/or PIN to retrieve the connection information. The user terminal 7 can display or print the retrieved connection information. In Fig. 1, the connection information is printed on a sheet 8 as QR code 9, which is scanned by the provisioning device 4.

In addition or alternatively, the networkable devices 1..3 can be ordered using an ordering terminal of a local store, wherein the access information is transmitted from the server 5 to the ordering terminal. The server 5 or the ordering terminal generates a QR code containing the access information and the ordering terminal prints/outputs an invoice with the QR code. The provisioning device 4 captures the QR code, decodes the access information from the QR code, stores the access information and retrieves the connection information from the server 5 to connect the networkable devices 1..3 as described. It is also possible that the server 5 sends the access information in the shipping confirmation by email to the provisioning device 4.

In addition or alternatively, the connection information assigned to an order can be made available via a website (HTML file), wherein the server 5 generates the HTML file containing the connection information or a link to it and transmits the URL of the HTML file as access information to the provisioning device 4 or the user terminal 7.

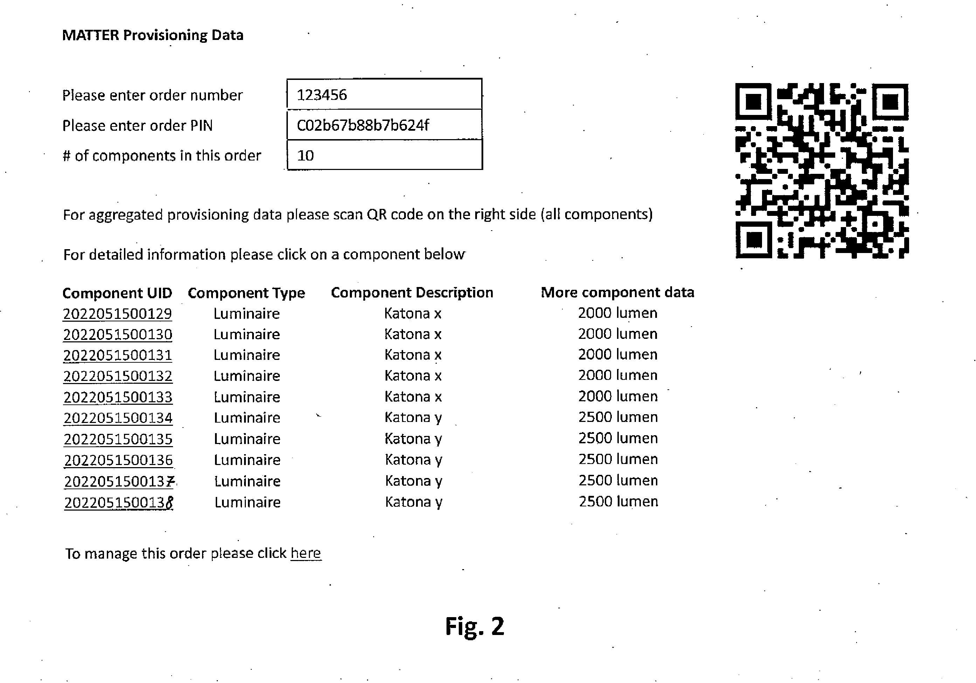

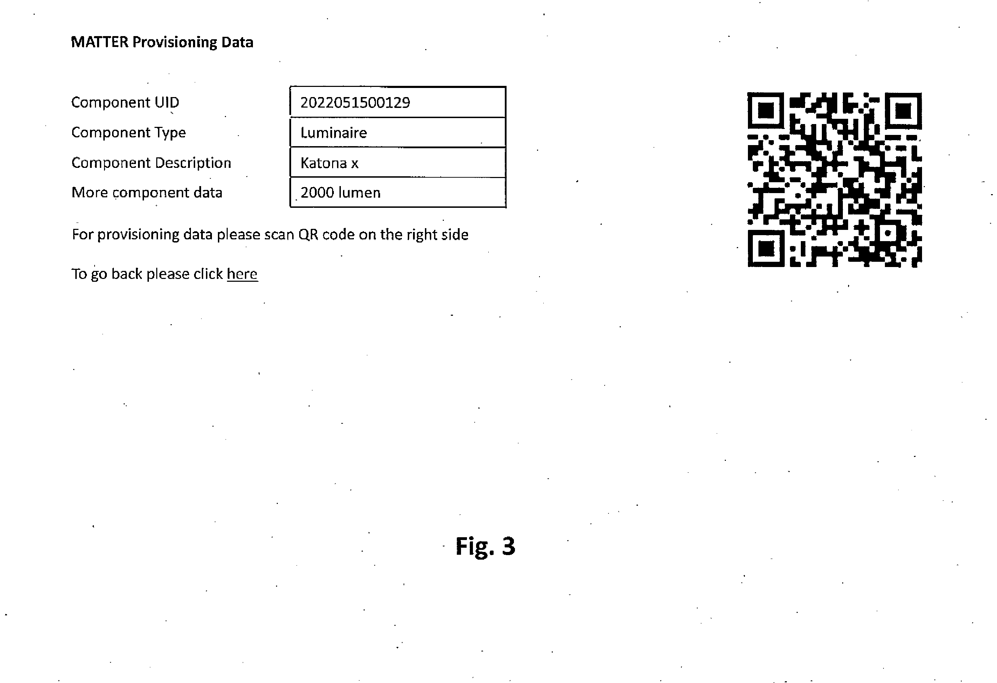

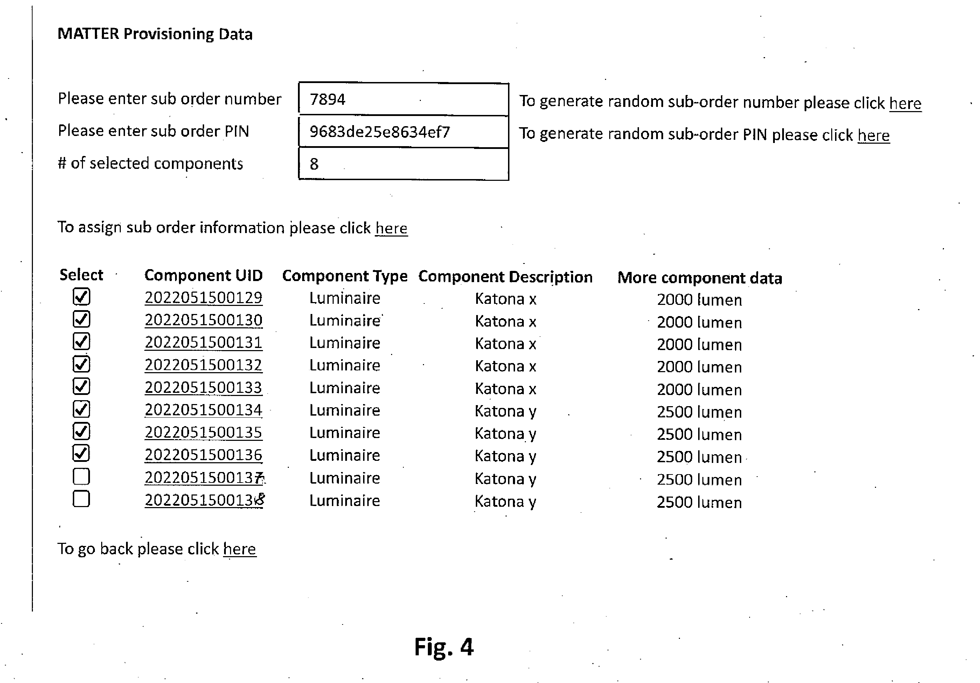

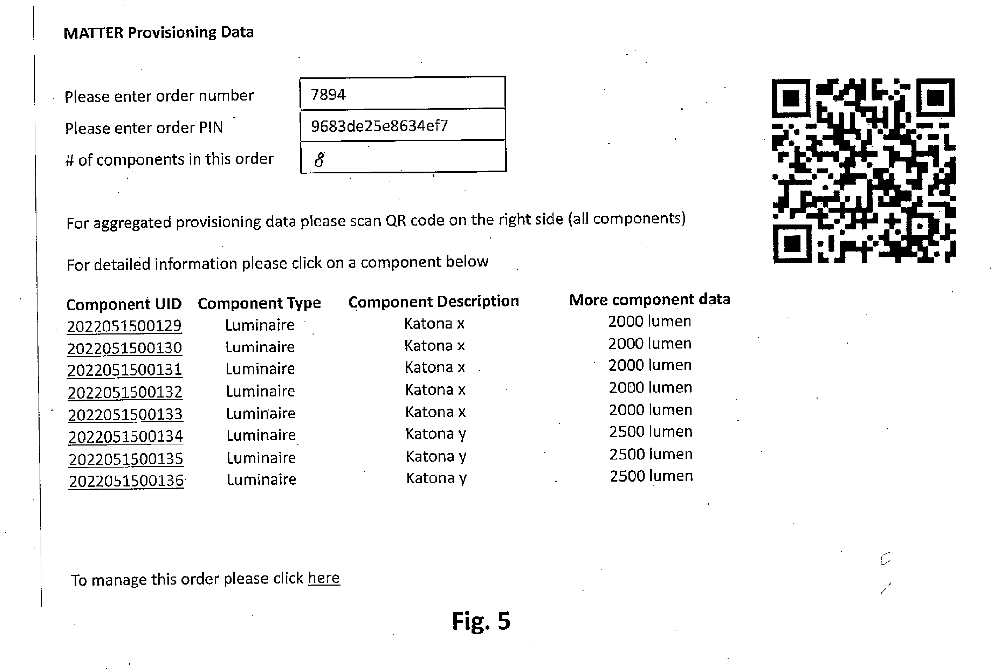

Fig. 2 shows a graphical user interface configured to allow the customer to enter the order number and PIN provided as access information and to display a list of device IDs (component UIDs) associated with the order number after the customer enters the order number and order PIN. When the customer selects/clicks a device ID (component UID) from/in the list, a QR code is displayed as shown in Fig. 3 to retrieve the connection information associated with the selected device ID. Further, the customer can manage the order, for example, if some devices of the list are to be resold or assigned to another use. Fig. 4 shows the graphical user interface that allows the customer to select device IDs from the list and generate a sub order number and PIN for the selected devices. After entering the sub-order number and PIN, a list of selected device IDs is displayed, as shown in Fig. 5.

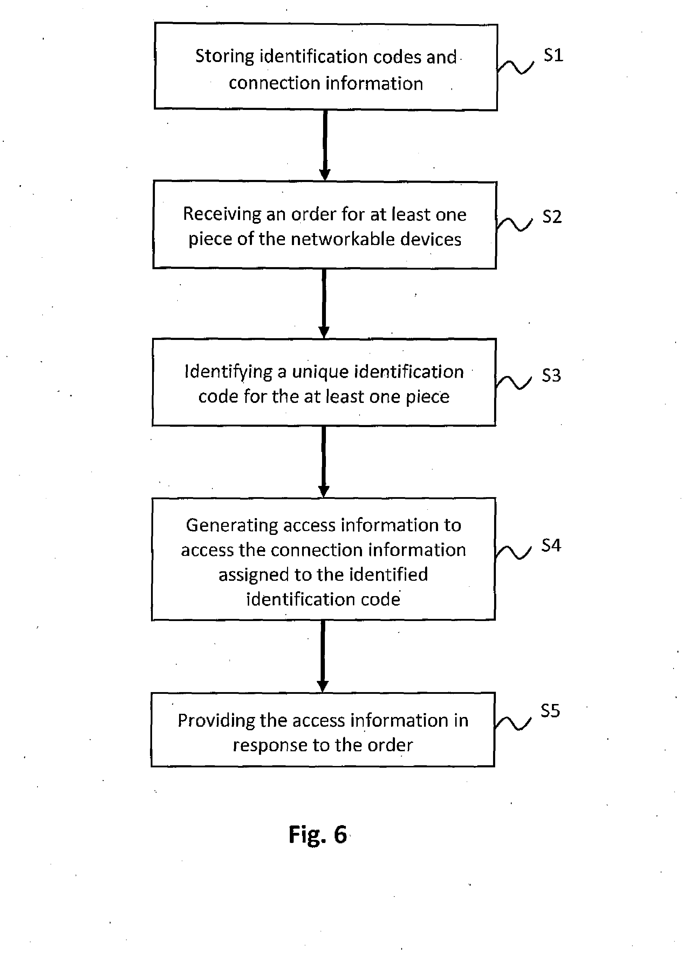

Fig. 6 shows a simplified flowchart showing the single steps performed by the realization of the method described in detail above. In step S1, unique identification code (device UID) and the connection information are stored in the database 6 for each networkable device. The database is updated as soon as a new device has been manufactured. In step S2, an order including information on name and/or type of each ordered networkable device and the number of pieces for each ordered type is received from a consumer and a stored identification code is identified for each piece of the ordered networkable devices in step S2. Access information to access the connection information assigned to the identified identification code is generated in step S4 and the access information is provided to the consumer or the provisioning device in step S5. The steps S2 to S5 are performed for each order. With the access information, the connection information can be retrieved manually by the consumer or automatically by the provisioning device 4. The wireless connection established based on the connection information is used to transmit the network information from the provisioning device 4 to the networkable device 1..3 and/or to configure the networkable device 1..3 by transmitting setup commands, addresses and/or parameters from the provisioning device 4 to the networkable device 1..3.

## Claims

1. An apparatus (5) for providing connection information required by a provisioning device (4) to establish a wireless connection between the provisioning device (4) and a networkable device (1..3), the apparatus (5) comprising a processor configured to
store, for each of a plurality of networkable devices (1..3), a unique identification code and the connection information assigned to the respective unique identification code,
obtain an order for a certain number of pieces of the networkable devices (1..3),
identify the unique identification code for each piece to be delivered in response to the order,
generate, for the order, access information to access only the connection information assigned to the unique identification codes that have been identified, and
provide the access information, and
receive a request including the generated access information, and
provide the connection information assigned to the received access information.

2. The apparatus (5) according to claim 1, wherein
the access information contains at least one Uniform Resource Locator; and
the processor is configured to generate an HTML file that is associated to the Uniform Resource Locator and that contains the connection information assigned to the at least one unique identification code.

3. The apparatus (5) according to claim 1 or 2, wherein
the access information contains an order number and/or a personal identification number; and
the processor is configured to assign, for the order, the order number and/or the personal identification number to the connection information.

4. The apparatus (5) according to claim 3, wherein
the processor is configured to generate a graphical user interface configured to allow a user to enter the order number and/or the personal identification number and to display the connection information assigned to the order number and/or the personal identification number after the user enters the order number and/or the personal identification number.

5. The apparatus (5) according to claim 4, wherein
the processor is configured to control the graphical user interface to display, after the user enters the order number and/or the personal identification number, at least all unique identification codes assigned to the order number and/or the personal identification number and to allow the user to select at least one of the displayed unique identification codes; and
the processor is configured to generate access information to access only the connection information assigned to the selected unique identification code.

6. The apparatus (5) according to claim 2, 4 or 5, wherein
the access information is presented in text form and/or in the form of a QR code (9).

7. The apparatus (5) according to any one of the preceding claims, wherein
the connection information contains a Bluetooth-PIN and/or a media access control address of the respective networkable device (1..3).

8. The apparatus (5) according to any one of the preceding claims, wherein
the apparatus (5) is configured to receive the order including at least information on the certain number of pieces of the networkable device (1..3) and to generate and output an invoice (8) or delivery note including the generated access information.

9. A system comprising the apparatus (5) according to any one of the preceding claims and the provisioning device (4).

10. The system according to claim 9, wherein
the apparatus (5) comprises a means configured to input the access information by a user and a means configured to output, to the user, the connection information assigned to the access information; and
the provisioning device (4) comprises a means configured to input the connection information by the user.

11. The system according to claim 9 or 10, wherein
the provisioning device (4) comprises a means configured to input the access information by the user and a means configured to transmit the access information to the apparatus (5) and to receive, from the apparatus (5), the connection information assigned to the access information.

12. The system according to claim 10 or 11, wherein
the provisioning device (4) is configured to store network information required by the networkable device (1..3) to connect the networkable device (1..3) to a wireless communication network, to detect the networkable device (1..3) within a radio range of the provisioning device (4), to establish the wireless connection between the provisioning device (4) and the detected networkable device (1..3) based on the connection information and to transmit the network information to the networkable device (1..3) via the established wireless connection.

13. The system according to claim 12, further comprising
the networkable device (1..3) configured to receive the network information, to detect a wireless access point of the wireless communication network within a radio range of the networkable device (1..3) and to establish a connection to the wireless access point based on the network information.

14. A method for providing connection information required by a provisioning device (4) to establish a wireless connection between the provisioning device (4) and a networkable device (1..3), the method being performed by an apparatus according to any of the claims 1 to 8 and the method comprising the steps of:
storing (S1), for each of a plurality of networkable devices (1..3), an unique identification code and the connection information assigned to the respective unique identification code,
obtaining (S2) an order for a certain number of pieces of the networkable devices (1..3),
identifying the unique identification code for each piece,
generating (S3), for the order, access information configured to access only the connection information assigned to the unique identification codes that have been identified, and
providing (S4) the access information, and
receiving a request including the generated access information, and
providing the connection information assigned to the received access information.

15. A program that, when running on a computer or loaded onto a computer, causes the computer to execute the steps of the method according to claim 14.

## Patentansprüche

1. Einrichtung (5) zum Bereitstellen von Verbindungsinformationen, die durch eine Bereitstellungsvorrichtung (4) angefordert werden, um eine drahtlose Verbindung zwischen der Bereitstellungsvorrichtung (4) und einer netzwerkfähigen Vorrichtung (1..3) herzustellen, die Einrichtung (5) umfassend einen Prozessor, der konfiguriert ist zum:
Speichern, für jede einer Vielzahl von netzwerkfähigen Vorrichtungen (1..3), eines eindeutigen Identifikationscodes und der Verbindungsinformationen, die dem jeweiligen eindeutigen Identifikationscode zugeordneten sind,
Erhalten, einer Bestellung für eine gewisse Stückzahl der netzwerkfähigen Vorrichtung (1..3),
Identifizieren des eindeutigen Identifikationscode für jedes Stück, das zu liefern ist, als Reaktion auf die Bestellung,
Generieren, für die Bestellung, von Zugriffsinformationen, um nur auf die Verbindungsinformationen zuzugreifen, die den eindeutigen Identifikationscodes, die identifiziert wurden, zugeordnet sind, und
Bereitstellen der Zugriffsinformationen, und
Empfangen einer Anforderung einschließlich der generierten Zugriffsinformationen und
Bereitstellen der Verbindungsinformationen, die den empfangenen Zugriffsinformationen zugeordnet sind.

2. Einrichtung (5) nach Anspruch 1, wobei
die Zugriffsinformationen mindestens einen Uniform-Resource-Locator enthalten; und
der Prozessor konfiguriert ist, um eine HTML-Datei zu generieren, die mit dem Uniform-Resource-Locator verknüpft ist und die die Verbindungsinformationen enthält, die dem mindestens einen eindeutigen Identifikationscode zugeordnet sind.

3. Einrichtung (5) nach Anspruch 1 oder 2, wobei
die Zugriffsinformationen eine Bestellnummer und/oder eine persönliche Identifikationsnummer enthalten; und
der Prozessor konfiguriert ist, um, für die Bestellung, die Bestellnummer und/oder die persönliche Identifikationsnummer den Verbindungsinformationen zuzuordnen.

4. Einrichtung (5) nach Anspruch 3, wobei
der Prozessor konfiguriert ist, um eine grafische Benutzeroberfläche zu generieren, die es einem Benutzer ermöglicht, die Bestellnummer und/oder die persönliche Identifikationsnummer einzugeben und die Verbindungsinformationen, die der Bestellnummer und/oder der persönlichen Identifikationsnummer zugeordnet sind, nachdem der Benutzer die Bestellnummer und/oder die persönliche Identifikationsnummer eingibt, anzuzeigen.

5. Einrichtung (5) nach Anspruch 4, wobei
der Prozessor konfiguriert ist, um, die grafische Benutzeroberfläche zu steuern, um, nachdem der Benutzer die Bestellnummer und/oder der persönlichen Identifikationsnummer , mindestens alle eindeutigen Identifikationscodes, die der Bestellnummer und/oder der persönlichen Identifikationsnummer zuordnet sind, eingibt, und um dem Benutzer zu ermöglichen, mindestens einen der angezeigten eindeutigen Identifikationscodes auszuwählen; und
der Prozessor konfiguriert ist, um Zugriffsinformationen zu generieren, um nur auf die Verbindungsinformationen zuzugreifen, die dem ausgewählten eindeutigen Identifikationscode zugewiesen sind.

6. Einrichtung (5) nach Anspruch 2, 4 oder 5, wobei
die Zugriffsinformationen in Textform und/oder in Form eines QR-Codes dargestellt (9) werden.

7. Einrichtung (5) nach einem der vorstehenden Ansprüche, wobei:
die Verbindungsinformationen eine Bluetooth-PIN und/oder eine Medienzugriffssteueradresse der jeweiligen netzwerkfähigen Vorrichtung (1..3) enthalten.

8. Einrichtung (5) nach einem der vorstehenden Ansprüche, wobei
die Einrichtung (5) konfiguriert ist, um die Bestellung einschließlich mindestens von Informationen über die gewisse Stückzahl der netzwerkfähigen Vorrichtung (1..3) zu empfangen und eine Rechnung (8) oder einen Lieferschein einschließlich der generierten Zugriffsinformationen zu generieren und auszugeben.

9. System, umfassend die Einrichtung (5) nach einem der vorstehenden Ansprüche und die Bereitstellungsvorrichtung(4).

10. System nach Anspruch 9, wobei
die Einrichtung (5) ein Mittel, das konfiguriert ist, um, die Zugriffsinformationen durch einen Benutzer einzugeben, und ein Mittel, das konfiguriert ist, um, an den Benutzer, die Verbindungsinformationen, die den Zugriffsinformationen zugeordnet sind, auszugeben; und
wobei die Bereitstellungsvorrichtung (4) ein Mittel, das konfiguriert ist, um die Verbindungsinformationen durch den Benutzer einzugeben, umfasst.

11. System nach Anspruch 9 oder 10, wobei
die Bereitstellungsvorrichtung (4) ein Mittel, das konfiguriert ist, um die Zugriffsinformationen durch den Benutzer einzugeben, und ein Mittel, das konfiguriert ist, um die Zugriffsinformationen an die Einrichtung (5) zu übertragen, und um, von der Einrichtung (5), die Verbindungsinformationen, die den Zugriffsinformationen zugeordnet sind, zu empfangen, umfasst.

12. System nach Anspruch 10 oder 11, wobei
die Bereitstellungsvorrichtung (4) konfiguriert ist, um die Netzwerkinformationen zu speichern, die durch die netzwerkfähige Vorrichtung (1..3) angefordert werden, um die netzwerkfähige Vorrichtung (1..3) mit einem drahtlosen Kommunikationsnetzwerk zu verbinden, um die netzwerkfähige Vorrichtung (1..3) innerhalb eines Funkbereichs der Bereitstellungsvorrichtung (4) zu erfassen, um die drahtlose Verbindung zwischen der Bereitstellungsvorrichtung (4) und der erfassten netzwerkfähigen Vorrichtung (1..3) herzustellen, basierend auf den Verbindungsinformationen, und um die Netzwerkinformationen an die netzwerkfähige Vorrichtung (1..3) über die hergestellte drahtlose Verbindung zu übertragen.

13. System nach Anspruch 12, ferner umfassend
wobei die netzwerkfähige Vorrichtung (1..3) konfiguriert ist, um die Netzwerkinformationen zu empfangen, um einen drahtlosen Zugriffspunkt des drahtlosen Kommunikationsnetzwerks innerhalb eines Funkbereichs der netzwerkfähigen Vorrichtung (1..3) zu erfassen, und um eine Verbindung mit dem drahtlosen Zugriffspunkt, basierend auf den Netzwerkinformationen, herzustellen.

14. Verfahren zum Bereitstellen von Verbindungsinformationen, die durch eine Bereitstellungsvorrichtung (4) angefordert werden, um eine drahtlose Verbindung zwischen der Bereitstellungsvorrichtung (4) und einer netzwerkfähigen Vorrichtung (1..3) herzustellen, wobei das Verfahren durch eine Einrichtung nach einem der Ansprüche 1 bis 8 durchgeführt wird, und das Verfahren umfassend die Schritte:
Speichern (S1), für jedes einer Vielzahl von netzwerkfähigen Vorrichtung (1..3), eines eindeutigen Identifikationscodes und der Verbindungsinformationen, die dem jeweiligen eindeutigen Identifikationscode zugeordnet sind,
Erhalten (S2) einer Bestellung für eine gewisse Stückzahl der netzwerkfähigen Vorrichtungen (1..3),
Identifizierung des eindeutigen Identifikationscodes für jedes Stück,
Generieren (S3), für die Bestellung, von Zugriffsinformationen, die konfiguriert sind, um nur auf die Verbindungsinformationen zuzugreifen, die den eindeutigen Identifikationscodes, die identifiziert wurden, zugeordnet sind, und
Bereitstellen (S4) der Zugriffsinformationen und
Empfangen einer Anforderung einschließlich der generierten Zugriffsinformationen und
Bereitstellen der Verbindungsinformationen, die den empfangenen Zugriffsinformationen zugeordnet sind.

15. Programm, das, wenn es auf einem Computer läuft oder auf einen Computer geladen wird, den Computer veranlasst, die Schritte des Verfahrens nach Anspruch 14 auszuführen.

## Revendications

1. Appareil (5) destiné à fournir des informations de connexion requises par un dispositif de configuration (4) pour établir une connexion sans fil entre le dispositif de configuration (4) et un dispositif pouvant être mis en réseau (1..3), l'appareil (5) comprenant un processeur configuré pour
stocker, pour chacun d'une pluralité de dispositifs pouvant être mis en réseau (1..3), un code d'identification unique et les informations de connexion attribuées au code d'identification unique respectif,
obtenir une commande pour un certain nombre de pièces des dispositifs pouvant être mis en réseau (1..3),
identifier le code d'identification unique de chaque pièce à livrer en réponse à la commande,
générer, pour la commande, des informations d'accès permettant d'accéder uniquement aux informations de connexion attribuées aux codes d'identification uniques qui ont été identifiés, et
fournir les informations d'accès, et
recevoir une demande comportant les informations d'accès générées, et
fournir les informations de connexion attribuées aux informations d'accès reçues.

2. Appareil (5) selon la revendication 1, dans lequel
les informations d'accès contiennent au moins un localisateur de ressources uniformes ; et
le processeur est configuré pour générer un fichier **HTML** qui est associé au localisateur de ressources uniformes et qui contient les informations de connexion attribuées à l'au moins un code d'identification unique.

3. Appareil (5) selon la revendication 1 ou 2, dans lequel
les informations d'accès contiennent un numéro de commande et/ou un numéro d'identification personnel ; et
le processeur est configuré pour attribuer, pour la commande, le numéro de commande et/ou le numéro d'identification personnel aux informations de connexion.

4. Appareil (5) selon la revendication 3, dans lequel
le processeur est configuré pour générer une interface utilisateur graphique configurée pour permettre à un utilisateur d'entrer le numéro de commande et/ou le numéro d'identification personnel et pour afficher les informations de connexion attribuées au numéro de commande et/ou au numéro d'identification personnel après que l'utilisateur a entré le numéro de commande et/ou le numéro d'identification personnel.

5. Appareil (5) selon la revendication 4, dans lequel
le processeur est configuré pour commander l'interface utilisateur graphique pour afficher, après que l'utilisateur a entré le numéro de commande et/ou le numéro d'identification personnel, au moins tous les codes d'identification uniques attribués au numéro de commande et/ou au numéro d'identification personnel et pour permettre à l'utilisateur de sélectionner au moins l'un des codes d'identification uniques affichés ; et
le processeur est configuré pour générer des informations d'accès permettant d'accéder uniquement aux informations de connexion attribuées au code d'identification unique sélectionné.

6. Appareil (5) selon la revendication 2, 4 ou 5, dans lequel
les informations d'accès sont présentées sous forme de texte et/ou de code QR (9).

7. Appareil (5) selon l'une quelconque des revendications précédentes, dans lequel
les informations de connexion contiennent un code **PIN** Bluetooth et/ou une adresse de commande d'accès au support de l'appareil pouvant être mis en réseau respectif (1..3).

8. Appareil (5) selon l'une quelconque des revendications précédentes, dans lequel
l'appareil (5) est configuré pour recevoir la commande comportant au moins des informations sur le certain nombre de pièces du dispositif pouvant être mis en réseau (1..3) et pour générer et produire une facture (8) ou un bon de livraison comportant les informations d'accès générées.

9. Système comprenant l'appareil (5) selon l'une quelconque des revendications précédentes et le dispositif de configuration (4).

10. Système selon la revendication 9, dans lequel
l'appareil (5) comprend un moyen configuré pour entrer les informations d'accès par un utilisateur et un moyen configuré pour fournir, à l'utilisateur, les informations de connexion attribuées aux informations d'accès ; et
le dispositif de configuration (4) comprend un moyen configuré pour entrer les informations de connexion par l'utilisateur.

11. Système selon la revendication 9 ou 10, dans lequel
le dispositif de configuration (4) comprend un moyen configuré pour entrer les informations d'accès par l'utilisateur et un moyen configuré pour transmettre les informations d'accès à l'appareil (5) et pour recevoir, de l'appareil (5), les informations de connexion attribuées aux informations d'accès.

12. Système selon la revendication 10 ou 11, dans lequel
le dispositif de configuration (4) est configuré pour stocker les informations réseau requises par le dispositif pouvant être mis en réseau (1..3) pour connecter le dispositif réseau (1..3) à un réseau de communication sans fil, pour détecter le dispositif pouvant être mis en réseau (1..3) dans une portée radio du dispositif de configuration (4), pour établir la connexion sans fil entre le dispositif de configuration (4) et le dispositif pouvant être mis en réseau détecté (1..3) sur la base des informations de connexion et pour transmettre les informations réseau au dispositif pouvant être mis en réseau (1..3) par l'intermédiaire de la connexion sans fil établie.

13. Système selon la revendication 12, comprenant en outre
le dispositif pouvant être mis en réseau (1..3) configuré pour recevoir les informations réseau, pour détecter un point d'accès sans fil du réseau de communication sans fil dans une portée radio du dispositif pouvant être mis en réseau (1..3) et pour établir une connexion au point d'accès sans fil sur la base des informations réseau.

14. Procédé destiné à fournir des informations de connexion requises par un dispositif de configuration (4) pour établir une connexion sans fil entre le dispositif de configuration (4) et un dispositif pouvant être mis en réseau (1..3), le procédé étant effectué par un appareil selon l'une quelconque des revendications 1 à 8 et le procédé comprenant les étapes consistant à :
stocker (S1), pour chacun d'une pluralité de dispositifs pouvant être mis en réseau (1..3), un code d'identification unique et les informations de connexion attribuées au code d'identification unique respectif,
obtenir (S2) une commande pour un certain nombre de pièces des dispositifs pouvant être mis en réseau (1..3),
identifier le code d'identification unique pour chaque pièce,
générer (S3), pour la commande, des informations d'accès configurées pour accéder uniquement aux informations de connexion attribuées aux codes d'identification uniques qui ont été identifiés, et
fournir (S4) les informations d'accès, et
recevoir une demande comportant les informations d'accès générées, et
fournir les informations de connexion attribuées aux informations d'accès reçues.

15. Programme qui, lorsqu'il est exécuté sur un ordinateur ou chargé sur un ordinateur, amène l'ordinateur à exécuter les étapes du procédé selon la revendication 14.
